(19) Europäisches Patentamt
European Patent Office
Office européen des brevets

(11) Veröffentlichungsnummer: **0 000 605**
**B1**

# (12) EUROPÄISCHE PATENTSCHRIFT

(45) Veröffentlichungstag der Patentschrift: **06.04.83**

(51) Int. Cl.³: **C 08 G 59/18**, C 08 G 59/16, C 08 G 59/56

(21) Anmeldenummer: **78200101.0**

(22) Anmeldetag: **17.07.78**

## (54) Härtungsmittel für wässerige Epoxydharzdispersionen, deren Herstellung und Verwendung.

(30) Priorität: **18.07.77 CH 8853/77**

(43) Veröffentlichungstag der Anmeldung: **07.02.79 Patentblatt 79/3**

(45) Bekanntmachung des Hinweises auf die Patenterteilung: **06.04.83 Patentblatt 83/14**

(84) Benannte Vertragsstaaten: **BE CH DE FR GB NL SE**

(56) Entgegenhaltungen:
**FR-A-1 558 905**
**FR-A-2 068 390**
**FR-A-2 128 773**

**Chem. Abstract 82, 16. Juni 1975, Nr. 2/753406**

(73) Patentinhaber: **HOECHST AKTIENGESELLSCHAFT, Postfach 80 03 20, D-6230 Frankfurt/Main 80 (DE)**

(72) Erfinder: **Becker, Wilhelm, Dr., Öjendorfer Höhe 37 c, D-2000 Hamburg 74 (DE)**
Erfinder: **Karasmann, Horst, Walddörfer Strasse 250, D-2000 Hamburg 70 (DE)**

**EP 0 000 605 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Härtungsmittel für wässerige Epoxydharzdispersionen, deren Herstellung und Verwendung

Es ist bekannt, dass Polyamidoamine, die freie Aminogruppen enthalten und die aus Alkylenpolyaminen und polymerisierten ungesättigten, natürlichen Fettsäuren hergestellt werden, zum Härten von Epoxidharzen verwendet werden können. (Vergl. Epoxydverbindungen und Epoxydharze von Dr. Alfred Paquin, Springer-Verlag Berlin/Göttingen/Heidelberg 1958, Seiten 511 bis 516 und Lee & Neville «Handbook of Epoxy Resins» Mc Graw-Hill Book Co., New York, 1967, 10, 1.–10, 12.).

Die Härtung von Epoxidharzen mit Addukten, die aus Polyamidoaminen und Polyepoxiden gebildet werden, in Abwesenheit von Wasser ist ebenfalls durch die US-A-3280054 bekannt. Zwar wurde in der DE-A-1520918 erwähnt, härtbare, wässerige Dispersionen aus diesen Addukten und Epoxidharzen herzustellen, die hierbei erhaltenen Ergebnisse sind jedoch häufig nicht zufriedenstellend wie eigene Prüfungen ergeben haben. So sind in einigen Fällen die Addukte, besonders die aus aromatischen Polyepoxiden hergestellten, halbfest und nicht vollständig in wässrigem Milieu dispergierbar, während wässrige Dispersionen, die ein aromatisches Epoxidharz und ein aus einem aliphatischen Polyepoxid hergestellte Addukt enthalten, häufig unerwünschtes thixotropes Verhalten besitzen.

In der US-A-3383347 ist angegeben, phenolmodifizierte Amine, die Reaktionsprodukte einer primären Aminogruppe eines aliphatischen Polyamins mit einem Phenol oder Reaktionsprodukte eines aliphatischen Polyamins mit einem Phenol und einem Aldehyd sein können, als Härtungsmittel zu verwenden. Diese Härtungsmittel führen jedoch zu Epoxidharz-Härter-Emulsionen mit nicht ausreichender Verarbeitungszeit, die sehr spröde Beschichtungen bilden und die ausserdem in Gegenwart von Eisen unerwünschte rostbraune Verfärbungen aufweisen.

In der DE-A-1925941 werden Epoxidharz-Härter-Emulsionen beschrieben, die als Härterkomponente ein Aminoamid-Addukt enthalten, welches ein Aminoamid einer Fettsäure und eines Alkylenpolyamins darstellt und welches das Reaktionsprodukt des Aminoamids mit 10–40 Gewichtsprozent, (bezogen auf das Gewicht der schwer flüchtigen Aminoamid-Addukt-Anteile) Monoepoxid ist, welches aus einem aliphatischen Monoepoxid mit 2–12 C-Atomen oder aus einem durch einen Phenylrest substituierten Monoepoxid besteht.

Diese Epoxidharz-Härter-Emulsionen weisen eine relativ grosse Instabilität auf und scheiden schon innerhalb der Verarbeitungszeit Wasser aus. Die damit hergestellten Beschichtungen bleiben relativ weich und gegenüber mechanischen Einflüssen stark empfindlich, so dass sich damit keine ausreichend stabilen Schutzüberzüge herstellen lassen.

In der CH-A-487955 werden härtbare, wässerige Dispersionen beschrieben, die einen bei Raumtemperatur flüssigen Härter für das Epoxydharz enthalten, wobei im Härter der Wasserstoff direkt am Stickstoff gebunden ist, der durch Addition aus nicht aliphatischem Epoxyd, das nur eine endständige 1,2-Epoxydgruppe pro Molekül enthält, oder aliphatischem Epoxyd, das im Durchschnitt eine oder mehr als eine endständige, 1,2-Epoxydgruppe pro Molekül enthält, und einem stöchiometrischen Überschuss eines Poly(aminoamid)-Kondensationsproduktes, welches aus einem Alkylenpolyamin der Formel

$$H_2N{-}({-}Alkylen{-}NH{-})_n{-}H,$$

worin der Alkylenrest der Äthylen-, Propylen-, Butylen-, Pentylen oder Hexylenrest sein kann, n eine ganze Zahl grösser als Null bedeutet, und einem Mischpolymerisat einer konjugiert ungesättigten Fettsäure oder eines amidbildenden Säurederivates mit einer aromatischen Vinylverbindung, erhältlich ist.

Diese wässerigen Dispersionen enthalten vorzugsweise ferner einen Beschleuniger zur Härtung. Diese Beschleuniger sind Verbindungen, die wenigstens ein tertiäres Aminostickstoffatom und eine phenolische Hydroxylgruppe enthalten. Ausserdem enthalten die Dispersionen Orthophosphorsäure oder eine flüssige aliphatische Monocarbonsäure, z.B. Essigsäure. Auch diese Epoxyd-Härter-Dispersionen weisen noch eine ungenügende Stabilität auf und liefern nur relativ weiche und mechanisch empfindliche Schutzüberzüge. Ferner führt die Anwesenheit der dissoziierenden Säuren zu einer Instabilität der Dispersion, da das Säureanion ($A^-$) mit der Epoxydgruppe nach folgendem Schema reagieren kann und Epoxydgruppen verbraucht:

$$R.CH{-}CH + A^- + H_2O \rightarrow R.CH(OH).CH_2A + OH^- .$$

O

In der DE-A-2332177 werden Härtungsmittel für wässerige Epoxydharz-Dispersionen beschrieben, die Assoziate sind, aufgebaut aus:

1. Polyamidoamin-Epoxyd-Addukten (1) mit einem stöchiometrischen Überschuss eines Polyamidoamins (1a) aus einem Polyalkylenpolyamin (worin der Alkylenrest aus dem Äthylen-, Propylen-, Butylen-, Pentylen- oder Hexylenrest besteht) und mono-, di- und/oder trimerisierten Fettsäuren oder einem Mischpolymerisat konjugiert ungesättigter Fettsäuren oder amidbildender Fettsäurederivate (worin die Fettsäuren bzw. Fettsäurederivate in der monomeren Form 8 bis 24 Kohlenstoffatome enthalten) davon mit einer aromatischen Vinylverbindung und 5 bis 35 Gew.-%, bezogen auf das eingesetzte Polyamidoamin, einer aliphatischen Epoxydverbindung (1b) mit mehr als 2 endständigen, jedoch höchstens 6 Epoxydgruppen und

2. 5 bis 30 Gew.-%, bezogen auf das eingesetzte Polyamidoamin, eines Phenol-Formaldehyd-Polyamin-Kondensationsproduktes (2) (wobei das aliphatische, araliphatische, cycloaliphatische oder heterocyclische Polyamin mindestens 2, jedoch höchstens 8 direkt am Stickstoff gebundene Wasserstoffatome enthält) besteht.

Für die Herstellung von Überzügen ist es jedoch erforderlich, dem Gemisch von Epoxyharzpräpolymer und Härtungsmittel organische wasserverdünnbare Lösungsmittel zuzusetzen, um die Viskosität der Masse zu verringern und sie leichter anwendbar zu machen. Diese organischen Lösungsmittel erleichtern zwar die Anwendung der Massen und ergeben Filme mit guten Eigenschaften, bieten aber eine Reihe schwerwiegender Probleme. Die Lösungsmittel sind kostspielig und gewöhnlich giftig oder entzündlich. Verunreinigungen durch das Lösungsmittel während Herstellung, Lagerung, Transport und letztlicher Verwendung der Massen, Lösungsmitteldämpfe, Lösungsmittelabfälle von Reinigungsanlagen und Verspritzen von Lösungsmittel sind weitere Probleme, deren Lösung oft schwierig und kostspielig ist. Durch diese Nachteile wird die Verwendung der bekannten Epoxydüberzugsmassen beträchtlichen Beschränkungen unterworfen, insbesondere wenn sie im Zusammenhang mit dem Umgang oder der Herstellung von Nahrungsmitteln verwendet werden sollen. Ausserdem ist die Reinigung einer Anlage, die mit solchen Überzügen in Kontakt gestanden hat, von beträchtlichen Schwierigkeiten begleitet.

In der FR-A-2068390 werden wasserverdünnbare Hilfsmittel zum Emulgieren und Härten von Epoxydharzen beschrieben, die aus Umsetzungsprodukten aus Glycidyläthern von Polyalkylenpolyätherpolyolen und Polyaminen bestehen.

Die dort beschriebenen Produkte sind jedoch nicht auf der Basis einer zusätzlichen additionsfähigen ungesättigten Verbindung aufgebaut. Ausserdem geht dieses bekannte Verfahren von einem Monoepoxyd, nämlich Epichlorhydrin und einem Alkylenglykol aus, wobei als Katalysator Zinntetrachlorid verwendet wird. Bei diesem bekannten Verfahren würde der erfindungsgemäss eingesetzte $BF_3$-Amin-Komplex überhaupt nicht wirksam werden.

Die FR-A-2128773 beschreibt ein Härtungsmittel für Epoxydharze in Form eines Reaktionsprodukts aus a) mindestens einem Diamin, b) einem polyfunktionellen Polymeren, z.B. einem Butadien-Homo- oder Copolymerisat und gegebenenfalls c) einem Polyepoxyd. Der Anteil des Amins a) beträgt hierbei 20–80%, bezogen auf das Reaktionsprodukt aus a), b) und c). Diese Mischungen werden jedoch nur in organischen Lösungsmittelsystemen verwendet. Ferner sind die dort eingesetzten polymeren Komponenten b) keine Polyalkylen-polyäther-polyole und der Aminüberschuss liegt dort wesentlich höher als in den erfindungsgemässen Härtungsmitteln.

Aufgabe der vorliegenden Erfindung ist es, ein lösungsmittelfreies Härtungsmittel für wässerige Epoxydharz-Dispersionen zur Verfügung zu stellen, das die genannten Nachteile nicht hat und überraschend widerstandsfähige Schutzüberzüge in Verbindung mit wässerigen Epoxydharz-Dispersionen liefert.

Durch die Abwesenheit organischer Lösungsmittel entfallen die durch Geruch, Giftigkeit und Entzündlichkeit verursachten Probleme; ferner können alle Anlagen, die mit Epoxydharzen in Kontakt kommen, durch Waschen mit Wasser gereinigt werden.

Gegenstand der Erfindung sind Härtungsmittel für wässrige Epoxydharz-Dispersionen, bestehend aus einem Umsetzungsprodukt, erhältlich aus

A) 20 bis 80 Gew.-% eines Adduktes aus
a1) mindestens einer Polyepoxydverbindung und
a2) mindestens eines Polyalkylenpolyätherpolyols mit einem mittleren Molekulargewicht von 200 bis 10000 durch Umsetzung im Äquivalentverhältnis von a1:a2 = 2:(0,1 bis 1,5) mit
B) 80 bs 20 Gew.-% eines aliphatischen, cycloaliphatischen, araliphatischen oder heterocyclischen Polyamins oder Polyamingemisches, wobei das eingesetzte Amin in einer solchen Menge verwendet wird, dass die am Stickstoff befindlichen H-Atome in einem 2- bis 10-fachen Überschuss, bezogen auf die zur Umsetzung befähigten Epoxydgruppen, vorhanden sind, die dadurch gekennzeichnet sind, dass an die reaktiven Gruppen des Polyamins b1) noch C) zur Addition befähigte ungesättigte Verbindungen vom Typ

HC=C–X, wobei $R_1$=H, $-CH_3$ $-C_2H_5$, $R_2$=H,
| |
$R_1$ $R_2$

$-CH_3$ und X=–CN, –COOH, $-COOCH_3$, $-COOC_2H_5$, $-COOC_3H_7$,
$-COOC_4H_9$, $-CONH_2$, $-COONHCH_3$, $CON(CH_3)_2$ bedeuten, addiert sind.

Nach einer Ausführungsform der Erfindung ist das Addukt aus 2 bis 4 Äquivalenten der Komponente a1) und 0,2 bis 1,5 Äquivalenten der Komponente a2) mit 80–20 Gew.-% der Komponente B) und bis 0,5, vorzugsweise 0,1 bis 0,3 Äquivalenten der Komponente C) erhältlich. Vorzugsweise werden A) 50 bis 70 Gew.-% eines Adduktes aus 2,3 bis 3,0 Äquivalenten a1) und 0,3 bis 0,8 Äquivalenten a2) mit B) 50 bis 30 Gew.-% der Komponente eines aliphatischen, cycloaliphatischen, araliphatischen und/oder heterocyclischen Polyamins oder Polyamingemisches, wobei die eingesetzte Aminmenge in einem 5 bis 8-fachen Überschuss, bezogen auf die zur Umsetzung befähigten Epoxyd- und Aminwasserstoffgruppen, vorliegt, umgesetzt. Vorzugsweise ist a1 wasserunlöslich und a2 wasserlöslich.

Ein weiterer Gegenstand der Erfindung ist auch ein Verfahren zur Herstellung der Härtungsmittel, wie es in den Patentansprüchen 5 bis 7 beschrieben ist. Bevorzugt erfolgt die Umsetzung der Hydroxylgruppen des Polyalkylenpolyätherpolyols mit den Epoxydgruppen bei 20 bis 200°C.

Gegenstand der Erfindung ist auch die Verwendung der nach den vorstehend genannten Verfahren erhaltenen Härtungsmittel zusammen mit polyfunktionellen Epoxydverbindungen und Wasser sowie gegebenenfalls Emulgiermitteln zur Herstellung von aushärtbaren gegebenenfalls filmbildenden Dispersionen als Beschichtungs- oder Überzugsmittel.

Aus der grossen Zahl der polyfunktionellen Epoxydverbindungen a1), die mehr als eine 1,2-Epoxydgruppe im Molekül enthalten, seien genannt:

Die Epoxyde mehrfach-ungesättigter Kohlenwasserstoffe (Vinylcyclohexen, Dicyclopentadien, Cyclohexadien, Cyclododecadien, Cyclododecatrien, Isopren, 1,5-Hexadien, Butadien, Polybutadiene, Divinylbenzole und dergleichen), Oligomere des Epichlorhydrins und ähnliche, Epoxyäther mehrwertiger Alkohole (Äthylen-, Propylen- und Butylenglykole, Polyglykole, Thiodiglykole, Glycerin, Pentaerythrit, Sorbit, Polyvinylalkohol, Polyallylalkohol und ähnliche), Epoxyäther mehrwertiger Phenole (Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)-äthan, 2,2-Bis-(4-hydroxyphenyl)-propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-diphenylmethan, Bis-(4-hydroxyphenyl)-4'-methylphenylmethan, 1,1-Bis-(4-hydroxyphenyl)-2,2,2-trichloräthan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon sowie deren Hydroxyäthyläther, Phenol-Formaldehyd-Kondensationsprodukte, wie Phenolalkohole, Phenolaldehydharze und ähnliche, S- und N-haltige Epoxyde, (N,N-Diglycidylanilin, N,N'-Dimethyldiglycidyl-4,4-Diaminodiphenylmethan) sowie Epoxyde, welche nach üblichen Verfahren aus mehrfach ungesättigten Carbonsäuren oder einfach ungesättigten Carbonsäureestern ungesättigter Alkohole hergestellt worden sind, Glycidylestern, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon bzw. deren Derivaten und anderen) erhältlich sind.

Die vorstehenden polyfunktionellen Epoxydverbindungen, dieser Ausdruck schliesst auch den Begriff Epoxydharz ein, können einzeln oder im Gemisch, gegebenenfalls in Gegenwart von Lösungsmitteln oder Weichmachern, nach dem vorliegenden Verfahren umgesetzt oder zur Herstellung von Dispersionen verwendet werden. Sie können auch in Gemischen mit Monoepoxyden eingesetzt werden. So finden beispielsweise die folgenden Monoepoxyde im Gemisch mit den vorgenannten Epoxydverbindungen Verwendung: epoxydierte ungesättigte Kohlenwasserstoffe (Butylen-, Cyclohexen-, Styroloxyd und andere), halogenhaltige Epoxyde, wie z. B. Epichlorhydrin, Epoxyäther einwertiger Alkohole (Methyl-, Äthyl-, Butyl-, 2-Äthylhexyl-, Dodecylalkohol und andere), Epoxyäther einwertiger Phenole (Phenol, Kresol sowie andere in o- oder p-Stellung substituierte Phenole), Glycidylester ungesättigter Carbonsäuren, epoxydierte Ester von ungesättigten Alkoholen bzw. ungesättigten Carbonsäuren sowie die Acetale des Glycidaldehyds.

Als bevorzugte mehrwertige Phenole werden eingesetzt: Resorcin und verschiedene Bisphenole, die man durch Kondensation von Phenol mit Aldehyden und Ketonen wie z. B. Formaldehyd, Acetaldehyd, Aceton, Methyläthylketon u. a., erhält. Harze dieser Art sind in den US-A-2855159 und 2589245 beschrieben.

Besonders bevorzugte Epoxydharze sind Polyphenol-Glycidyl-äther, z. B. das Reaktionsprodukt aus Epichlorhydrin und 2,2-Bis-(4-hydroxyphenyl-)propan (=Bisphenol A), welches Epoxydharz folgende theoretische Strukturformel besitzt:

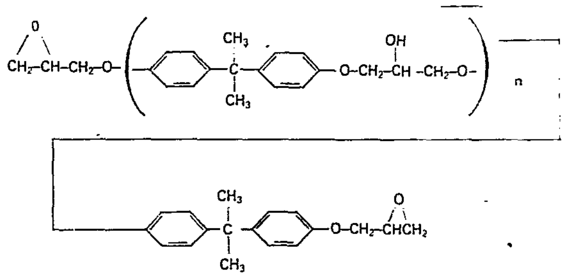

bzw. das Analogon auf Basis von Bisphenol F:

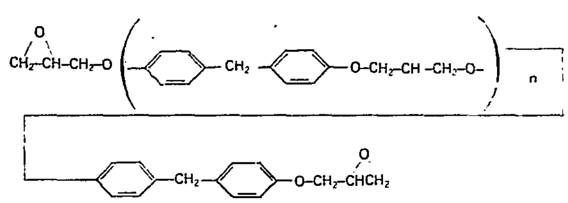

einzeln oder im Gemisch mit Bisphenol A, worin n 0 oder eine ganze Zahl bis 10 bedeutet. Normalerweise ist n nicht grösser als 2 oder 3 und vorzugsweise 1 oder weniger. Das Epoxydharz hat ein Epoxyd-Äquivalent von 160–500.

Zu geeigneten Polyalkylenpolyätherpolyolen b), die für die erfindungsgemässe Herstellung der Härtungsmittel angewandt werden können, gehören beispielsweise die Anlagerungsprodukte eines Alkylenoxyds oder eines Alkylenoxyds mit einem mehrwertigen Alkohol. Geeignete Alkylenoxyde sind beispielsweise Äthylenoxyd, Propylenoxyd, Butylenoxyd, Amylenoxyd und Hetero- oder Blockcopolymere dieser Oxyde, vorzugsweise aber Äthylenoxyd. Als mehrwertige Alkohole sind sowohl aliphatische Alkohole einzeln oder im Gemisch geeignet, z. B. Äthylenglykol, 1,3-Propylenglykol, 1,2-Propylenglykol, 1,4-Butylenglykol, 1,3-Butylenglykol, 1,2-Butylenglykol, 1,5-Pentandiol, 1,4-Pentandiol, 1,3-Pentandiol, 1,6-Hexandiol, 1,7-Heptandiol, Glycerin, 1,1,1-Trimethylolpropan, 1,1,1-Trimethyloläthan, Hexan-1,2,6-triol, α-Methylglucosid, Pentaerythrit und Sorbit.

Die Polyalkylenpolyätherpolyole können auch aus anderen Ausgangsstoffen hergestellt werden, z. B. aus Tetrahydrofuran und Alkylenoxid-Tetrahydrofuran-Copolymeren; Epihalogenhydrinen, z. B. Epichlorhydrin sowie Aralkylenoxyden, z. B. Styroloxyd.

Die Polyalkylenpolyätherpolyole können entweder primäre oder sekundäre Hydroxylgruppen aufweisen und sind vorzugsweise Polyäther, die aus Alkylenoxyden mit 2 bis 6 Kohlenstoffatomen hergestellt werden, z. B. Polyäthylenätherglykole, Polypropylenätherglykole und Polybutylenätherglykole. Die Polyalkylenpolyätherpolyole können nach jedem bekannten Verfahren hergestellt werden, z. B. nach dem Verfahren, das von Wurtz 1859 angegeben wurde und in Encyclopedia of Chemical Technology, Bd. 7, S. 257 bis 262, Interscience Publishers, Inc (1951) oder in der US-A-1922459 beschrieben ist. Die mittlere Molmasse der Komponente a2 beträgt 200 bis 10000, vorzugsweise 800 bis 1200.

Gemäss der Erfindung können aliphatische, cycloaliphatische, araliphatische und heterocyclische Amine oder deren Gemische als Komponente B mit den Epoxyd-Polyalkylenpolyätherpolyol-Addukten umgesetzt werden.

Als Beispiele seien genannt: aliphatische, gesättigte oder ungesättigte, bifunktionelle Amine, z. B. niedere aliphatische Alkylen-Polyamine, wie z. B. Äthylendiamin, 1,2-Propylendiamin; 1,3-Propylendiamin, 1,4-Butylendiamin, Hexamethylendiamin, 2,2,4-(2,4,4-)Trimethylhexamethylendiamin oder Polyalkylen-Polyamine, z. B. homologe Polyäthylen-Polyamine, wie Diäthylentriamin, Triäthylentetramin, Tetraäthylenpentamin oder analoge Polypropylen-Polyamine, wie z. B. Dipropylentriamin, oder Polyoxypropylenpolyamine und Diamine der allgemeinen Formel $H_2N.CH_2{-}X{-}CH_2.NH_2$, wobei X die zweiwertigen Reste bedeutet.

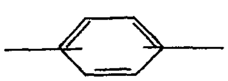
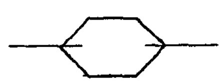

Im einzelnen seien 1,2-, 1,3- und 1,4-Bis(aminomethyl)-benzol, bzw. Gemische der Isomeren, 1,2-, 1,3- und 1,4-Bis-(aminomethyl-)cyclohexan bzw. Gemische der Isomeren, erwähnt. Weiter können Isophorondiamin (= 1-Amino-3-aminomethyl-3,5,5-trimethylcyclohexan) und N-Aminoäthylpiperazin eingesetzt werden. Bevorzugte Verbindungen der Komponente B sind jedoch Xylylendiamin, 1-Amino-3-aminomethyl-3,5,5-trimethyl-cyclohexan, 2,2,4-(2,4,4,-)-Trimethylhexamethylendiamin oder Polyoxypropylenpolyamin sowie deren Gemische. Es ist möglich, alle genannten Amine vor der Umsetzung mit dem Epoxyd-Polyalkylenpolyätherpolyol-Addukt mit der einfach ungesättigten Verbindung C vom Typ HC=C–X, zu sogenannten cyanäthylierten Aminen umzusetzen und diese dann statt der reinen Polyamine einzusetzen.

| |
$R_1$ $R_2$

Nachfolgend beschriebener Weg ist jedoch gebräuchlicher. Bevor das Umsetzungsprodukt aus Polyaminen und dem Epoxyd-Polyalkylenpoly-ätherpolyol-Addukt mit der einfach ungesättigten Verbindung umgesetzt wird, kann ggf. mit Wasser auf einen Festkörpergehalt von 50,0 bis 90 Gew.-% verdünnt werden.

Die Umsetzung mit der einfach ungesättigten Verbindung erfolgt durch Zugabe von z. B. Acrylnitril bei 20 bis 70°C, wobei nach der Zugabe eine Verweilzeit bei erhöhter Temperatur, bevorzugt 50 bis 70°C angebracht ist. Acryl- oder Methacrylnitril bilden die bevorzugten Verbindungen der Komponente C.

Geeignete $BF_3$-Aminkomplexe sind beispielsweise diejenigen, die aus folgenden Aminen ($pK_b$-Werte in Klammern) und $BF_3$ gebildet werden: n-Amylamin (10,63), Anilin (4,63), β-Phenylalanin = 2-Aminoäthylbenzol (9,84), 2-Äthylbenzimidazol (6,18), Benzylamin (9,33), trans-Bornylamin (10,17), 1-Amino-3-Methylbutan (10,60), 1,4-Diaminobutan (11,15), n-Butylamin (10,77), t.-Butylamin (10,83), n-Butylcyclohexylamin (11,23), Cyclohexylamin (10,66), n-Decylamin (10,64), Diäthylamin (10,49), Diisobutylamin (10,91), Diisopropylamin (10,96), Dimethylamin (10,73), n-Dodecanamin = Laurylamin (10,63), 2-Aminoäthanol (9,50), Äthylamin (10,81), Hexadecanamin (10,63), 1-Aminoheptan (10,66), 2-Aminoheptan (10,88), n-Hexylamin (10,56), 2,4-Dimethylimidazol (8,36), Morpholin (8,33), Methylamin (10,66), n-Nonylamin (10,64), Octadecanamin (10,60), Octylamin (10,65), 3-Aminopentan (10,59), 3-Amino-3-Methylpentan (11,01), n-Pentadecylamin (10,61), Piperazin (9,83), Propylamin (10,71), Pyrrolidin (11,27), Tetradecanamin = Myristylamin (10,62), Tridecanamin (10,63), Triäthylamin (11,01), Trimethylamin (9,81).

Bevorzugt werden $BF_3$-Benzylamin, $BF_3$-Monoäthylamin, $BF_3$-Propylamin und $BF_3$-n-Butylamin eingesetzt.

Für ein g-Äquivalent einer mit einem g-Äquivalent einer Epoxydgruppe umzusetzenden Hydroxylgruppe werden 100 bis 1, bevorzugt 15 bis 2 mMol, des $BF_3$-Aminkomplexes eingesetzt. Die Umsetzung der Hydroxylgruppen mit den Epoxydgruppen kann im Temperaturbereich von 20 bis 200°C vorgenommen werden. Die Umsetzungstemperatur ist abhängig von dem jeweiligen $BF_3$-Aminkomplex. Beispielsweise liegt die Umsetzungstemperatur bei Verwendung von $BF_3$-Monoäthylamin oder $BF_3$-Benzylamin um 130°C. Man erwärmt deshalb zweckmässig die umzusetzenden Gemische aus Hydroxylgruppen und Epoxydgruppen enthaltenden Verbindungen bis zu derjenigen Temperatur, bei der die Umsetzung mit ausreichender Geschwindigkeit, d. h. in 30 Minuten bis 15 Stunden, abläuft. Die Umsetzung verfolgt man zweckmässig über die Zunahme des Epoxydäquivalents, das eine Verminderung der Epoxydgruppen anzeigt.

Die Reaktion kann durch Kühlung unter die Reaktionstemperatur abgebrochen werden.

Ein Teil des $BF_3$-Amin-Komplexes wird während der Reaktion durch Einbau der Fluoridionen in das Umsetzungsprodukt verbraucht. Ein etwaiger Überschuss des $BF_3$-Amin-Komplexes kann nach Reaktionsablauf durch Zugabe von basisch wirkenden Substanzen wie Bleicherde, Calciumoxyd, Calciumhydroxyd, Bariumoxyd und Bariumhydroxyd im Überschuss zum Komplex unschädlich gemacht werden. Die basisch wirkenden Substanzen werden zusammen mit den aus ihnen und den $BF_3$-Aminkomplexen entstehenden Produkten durch Filtration entfernt. Die Umsetzung des Adduktes, welches noch reaktionsfähige Epoxydgruppen enthält, mit dem Polyamin oder dem Addukt aus Polyamin und Komponente C wird bei 20 bis 100°C, vorzugsweise 20 bis 40°C durchgeführt. Danach ist eine Haltezeit bei erhöhter Temperatur, bevorzugt 50 bis 80°C, unter Rühren für 1 bis 3 Stunden angebracht.

Die erfindungsgemässen Härtungsmittel werden, gegebenenfalls zusammen mit Emulgiermitteln, zur Herstellung von wässrigen härtbaren Epoxydharzdispersionen verwendet, die als Beschichtungs- oder Überzugsmittel eingesetzt werden.

Die mit den erfindungsgemässen Härtungsmitteln härtbaren Epoxydharze können weitere Zusätze, wie z.B. Netzmittel, enthalten, bevorzugte Netzmittel sind die im Handel erhältlichen, nicht ionischen Netzmittel auf der Basis von modifiziertem Alkylphenol, wie z.B. Alkylphenoxypoly-(äthylenoxy-)äthanol, ein Kondensat aus Nonylphenol und Äthylenoxyd, enthaltend 9–10 Mol Äthylenoxyd pro Mol Nonylphenol, usw.

Die Epoxydharze, gegebenenfalls versetzt mit Verdünnungsmitteln und/oder Netzmitteln, werden im allgemeinen in Wasser eingetragen, so dass die Dispersion vorzugsweise bis zu 50 Gew.-% Wasser enthält. Wenn eine Kombination aus Epoxydharz und erfindungsgemässem Härtungsmittel als Blockfüllstoff benutzt wird oder wenn Pigmente zugegen sind, kann der Wassergehalt sogar 90 Gew.-% betragen. Wenn farbige Überzugsmischungen aus Epoxydharzen und erfindungsgemässen Härtungsmitteln hergestellt werden, können verschiedene Zusatzstoffe zu der Dispersion aus Epoxydharz und dem erfindungsgemässen Härtungsmittel zugesetzt werden. Diese schliessen Pigmente wie Titandioxyd, Eisenoxyd, Füllstoffe wie Asbest, Talkum, Mörtel und andere zementähnliche Stoffe, Pigment-Dispergierstoffe und andere herkömmliche Farb- und Überzugshilfsstoffe ein. Die Dispersion aus Epoxydharzen und erfindungsgemässen Härtungsmitteln auf der Basis von Wasser kann in jeder beliebigen bekannten Weise verwendet werden. Geeignete Methoden schliessen ein: Bürstenanwendung, Rollen, Sprühen, Giessüberziehen, Eintauchen, Rakel, Pressen, Spachteln, Elektroabscheidung, Siebdruck usw.

Die Dispersion aus Epoxydharzen und erfindungsgemässen Härtungsmitteln kann verwendet werden als Grundlack, Füllstoff, Klarsiegler, Schutzanstrich, Überzüge, Dichtungen, dünne Mörtel, Mörtel usw. Ihre Anwendung ist dort besonders zweckmässig, wo Korrosionsbeständigkeit erwünscht ist. Die Dispersionen können auch mit Epoxydharz/Thermoplast-Mischungen, wie Kohlenteer, Vinylpolymerisaten usw. verwendet werden. Sie kann als Bindemittel für Presskohle, leitende Bodenbeläge und Spachtelmassen, als Klebstoff für Holz, Gewebe, Leder und Metall und für verschiedenartige Schichtträger, wie zementierte Fussböden, Wände, Schwimmbäder, Glas, glasierte Ziegel usw. benutzt werden. Weiter kann die Epoxydharz-Dispersion mit Mörtel oder Zement gemischt werden, wobei das Wasser als Emulsion benutzt wird, um den Zement anzuteigen. Umgekehrt kann das Wasser in der Zementmischung als Lösungsmittel für die Epoxydharz-Dispersion benutzt werden. Ein Zusatz des erfindungsgemässen Härtungsmittels ermöglicht gleichmässiges Mischen von Zement und Epoxydharz-Härter-Dispersion. So ist es möglich, Epoxydharz-Härtungsmittel-Dispersion-gehärteten Zement zu erhalten.

In den Beispielen werden die Viskositäten bei 25°C im Kugefallviskosimeter nach Höppler gemessen. Das Zeichen ≙ bedeutet «ungefähr» und EV Epoxydäquivalentgewicht.

Beispiele

Herstellung der Härtungsmittel

1 A) 300g Polyäthylenglykol, mittlere Molmasse 1000 (≙ 0,6 Val), 470g Bisphenol A-Diglycidyläther/Bisphenol F-Diglycidyläther-Gemisch im Verhältnis 60:40 Gew.-Teilen mit einem EV-Wert von 180 (≙ 2,6 Val) und 2g $BF_3$-Amin-Komplex (z.B. Anchor 1040) werden in einen 2 l-Dreihalskolben, der mit einem Thermometer und Rührer versehen ist, eingewogen. Der Kolben wird über einen Abscheider an einen Kühler angeschlossen. Unter Stickstoff als Inertgas heizt man in 30' auf 80°C, wobei sich eine homogene Mischung bildet.

Danach heizt man auf 170°C und hält diese Temperatur bis der theoretische EV-Wert von 385±+10 erreicht ist. Nach 5 Stunden Haltezeit bei 170°C erhielt man einen EV-Wert von 378. Die Viskosität des Produktes beträgt 9600 mPa.s. Dieses Produkt wird als Vorprodukt für die Herstellung der erfindungsgemässen Härtungsmittel weiterverwendet.

1 B) In einem 1 l-Dreihalskolben werden 272g Xylylendiamin (4 Val) vorgelegt, Stickstoff wird übergeleitet und bei Raumtemperatur werden unter Rühren 378g (1 Val) Vorprodukt nach Beispiel 1A in 15 bis 30' zugesetzt. Nach Beendigung der Zugabe wird noch 1 Stunde verrührt, wobei die Temperatur auf ca. 60°C ansteigt. Nach Abfallen der Temperatur auf ca. 80°C geheizt und 1 Stunde dort gehalten. Das Wasserstoffäquivalentgewicht (HAV) beträgt 93. Dieses Produkt wird mit Wasser 80%ig verdünnt, das HAV beträgt nun 116.

1 C) 813g dieser 80%igen wässrigen Lösung enthalten 7 aktive Aminwasserstoffatome. Bei 60°C addiert man durch Zutropfen in 30' 74g Acrylnitril, das entspricht 0,2 Val Acrylnitril pro Aminwasserstoff. Nach Beendigung der Zugabe hält man noch 1 Std. bei 60°C.

Das erhaltene Härtungsmittel ist nun 82%ig, hat einen HAV von 159 und eine Viskosität von 2330 mPa.s.

2 B) In einem 2 l-Dreihalskolben werden 272g Xylylendiamin (4 Val) vorgelegt, Stickstoff wird übergeleitet und bei Raumtemperatur werden unter Rühren 173g (1,25 Val) Vorprodukt nach Beispiel 1 A in 15 bis 30' zugesetzt. Nach Beendigung der Zugabe wird noch 1 Stunde verrührt, wobei die Temperatur auf ca. 60°C ansteigt. Nach Abfallen der Temperatur wird auf 80°C geheizt und 1 Std. dort gehalten. Das HAV beträgt 111. Dieses Produkt wird mit Wasser 80%ig verdünnt, das HAV beträgt nun 138.

2 C) 932g dieser 80%igen wässrigen Lösung enthalten 6,75 aktive Aminwasserstoffatome. Bei 60°C addiert man durch Zutropfen in 30' 71,5g Acrylnitril, das entspricht 0,2 Val Acrylnitril pro Aminwasserstoff. Nach Beendigung der Zugabe hält man noch 1 Std. bei 60°C. Das erhaltene Härtungsmittel ist nun 81%ig, hat einen HAV von 186 und eine Viskosität von 5150 mPa.s.

3 A) Beispiel 1 A wurde wiederholt. Nach 4,5 Std. Haltezeit bei 170°C erhielt man einen EV-Wert von 391.

3 B) In einem 2 l-Dreihalskolben werden 136g Xylylendiamin (2 Val) und 170g 1-Amino-3-aminomethyl-3,5,5-trimethylcyclohexan (2 Val) vorgelegt, Stickstoff wird übergeleitet und bei Raumtemperatur werden unter Rühren 489g (1,25 Val) Vorprodukt nach Beispiel 3 A in 15' bis 30' zugesetzt. Nach Beendigung der Zugabe wird noch 1 Stunde verrührt, wobei die Temperatur auf ca. 60°C ansteigt. Nach Abfallen der Temperatur wird auf 80°C geheizt und 1 Stunde dort gehalten. Das HAV beträgt 118. Dieses Produkt wird mit Wasser 80%ig verdünnt, das HAV beträgt 147.

3 C) 994g dieser 80%igen wässrigen Lösung enthalten 6,75 aktive Aminwasserstoffatome. Bei 60°C addiert man durch Zutropfen in 30' 71,5g Acrylnitril, das entspricht 0,2 Val Acrylnitril pro Aminwasserstoff. Nach Beendigung der Zugabe hält man noch 1 Std. bei 60°C.

Das erhaltene Härtungsmittel ist nun 81,5%ig, hat einen HAV von 197 und eine Viskosität von 13450 m.Pa.s.

4 A) Es wurde das Produkt aus Beispiel 3 A eingesetzt.

4 B) In einen 2 l-Dreihalskolben werden 489g (1,25 Val) Vorprodukt nach Beispiel 3 A vorgelegt, Stickstoff wird übergeleitet und bei Raumtemperatur werden unter Rühren nacheinander 136g Xylylendiamin (2 Val) und 170g 1-Amino-3-aminomethyl-3,5,5-trimethylcyclohexan (2 Val) in 10–15 Minuten zugesetzt. Nach Beendigung der Zugabe wird noch 1 Stunde verrührt, wobei die Temperatur auf ca. 65°C ansteigt. Nach Abfallen der Temperatur wird auf 80°C geheizt und 1 Stunde dort gehalten. Das HAV beträgt 118. Dieses Produkt wird mit Wasser 80%ig verdünnt, das HAV beträgt 147.

4 C) Es wurde wie unter Beispiel 3 C beschrieben verfahren. Das erhaltene Härtungsmittel ist 81,5%ig, hat einen HAV von 197 und eine Viskosität von 13120 mPa.s.

5 A und B) Beispiel 3 A und B wurden wiederholt.

5 C) 882g der 80%igen Lösung, wie unter Beispiel 3 B beschrieben, enthalten 6,0 aktive Aminwasserstoffatome. Bei 60°g addiert man durch Zutropfen in 30 Minuten 79,5g Acrylnitril, das entspricht 0,25 Val Acrylnitril pro Aminwasserstoff. Nach Beendigung der Zugabe hält man noch 1 Std. bei 70°C. Das erhaltene Härtungsmittel ist nun 82%ig, hat einen HAV von 216 und eine Viskosität von 14520 mPa.s.

6 A und B) Beispiel 1 A und B wurden wiederholt.

6 C) 696g der 80%igen Lösung, wie unter Beispiel 1 B beschrieben, enthalten 6,0 aktive Aminwasserstoffatome. Bei 50°C addiert man durch Zutropfen in 30 Minuten 79,5g Acrylnitril, das entspricht 0,25 Val Acrylnitril pro Aminwasserstoff. Nach Beendigung der Zugabe hält man noch 1,5 Std. bei 70°C. Das erhaltene Härtungsmittel ist nun 82%ig, hat einen HAV von 175 und eine Viskosität von 3150 mPa.s.

7 C) 932g der 80%igen Lösung, wie unter Beispiel 2 B beschrieben, werden mit 89,5g Acrylnitril (0,25 Val pro Aminwasserstoff) wie unter Beispiel 5C beschrieben umgesetzt. Das erhaltene Härtungsmittel ist nun 82%ig, hat einen HAV von 202 und eine Viskosität von 5900 m.Pa.s.

8 – 11)

| Beispiel | Vorprodukt | Umsatz | HAV | Viskosität 25°C |
|---|---|---|---|---|
| 8 C | 994 g 4 B | 89,5 g Acrylnitril (0,25 Val pro Aminwasserstoff) | 205 | 13900 mPa.s |
| 9 C | 813 g 1 B | 37 g Acrylnitril (0,1 Val) | 135 | 1850 mPa.s |
| 10 C | 932 g 2 B | 36 g Acrylnitril (0,1 Val) | 159 | 4640 mPa.s |
| 11 C | 994 g 3 B | 36 g Acrylnitril (0,1 Val) | 170 | 12500 mPa.s |

Bei den Beispielen 8C–11C wurde wie unter Beispiel 5C verfahren.

12 A) Es wurden 300 g Polyäthylenglykol, mittlere Molmasse 1000(≙ 0,6 Val),482 g Bisphenol A-Diglycidyläther mit einem EV-Wert von 185 (Viskosität 9800 mPa.s) und 2 g $BF_3$-Amin-Komplex wie unter Beispiel 1 A beschrieben umgesetzt.

Das Produkt hatte folgende Kenndaten:
EV-Wert: 388
Viskosität: 13750 mPa.s

12 B) 388 g dieses Produktes wurden mit 272 g Xylylendiamin wie unter Beispiel 1 B beschrieben umgesetzt. Die 80%ige Lösung in Wasser hat einen HAV von 118.

12 C) 590 g der 80%ige Lösung werden nun wie unter Beispiel 1 C beschrieben mit 53 g Acrylnitril (0,2 Val pro Aminwasserstoff) umgesetzt. Das HAV beträgt nun 161, die Viskosität beträgt 3940 mPa.s.

Tabelle 1

Weitere Vorprodukte nach Beispiel 1 A wurden wie folgt hergestellt:

| Beispiel | Polyalkylenpolyol Menge/Val | mittlere Molmasse | Epoxidharz Menge/Val | $BF_3$-Amin-Komplex | Endprodukt EV-Wert |
|---|---|---|---|---|---|
| 13 A | Polyäthylenglykol 60 g/0,6 Val | 200 | wie in 1 A 470 g/2,6 Val | 1,75 g | 264 |
| 14 A | Polyäthylenglykol 150 g/0,3 Val | 1000 | wie in 1 A 470 g/2,6 Val | 2,0 g | 267 |
| 15 A | Polyäthylenglykol 600 g/0,9 Val | 1000 | wie in 1 A 470 g/2,6 Val | 2,0 g | 640 |
| 16 A | Polyäthylenglykol 300 g/0,6 Val | 2000 | wie in 1 A 470 g/2,6 Val | 2,2 g | 338 |
| 17 A | Polypropylenglykol 300 g/0,6 Val | 1000 | wie in 1 A 470 g/2,6 Val | 2,0 g | 388 |
| 18 A | auf Basis Trimethylolpropan und Propylenoxid 500 g/0,6 Val | 2500 | wie in 1 A 470 g/2,6 Val | 2,3 g | 482 |
| 19 A | auf Basis Pentaerythrit und Propylenoxid 90 g/0,6 Val | 600 | wie in 1 A 470 g/2,6 Val | 2,2 g | 278 |

Je 1,25 Val, bezogen auf Epoxydgruppen, der unter Beispiel 13 A bis 19 A aufgeführten Vorprodukte wurden mit 136 g Xylylendiamin (2 Val) und 170 g 1-Amino-3-aminomethyl-3,5,5-trimethylcyclohexan (2 Val) nach Beispiel 3 B umgesetzt.

Tabelle 2

| Beispiel | HAV der 80%igen wässrigen Lösung |
|---|---|
| 13 B | 118 |
| 14 B | 119 |
| 15 B | 205 |
| 16 B | 135 |
| 17 B | 147 |
| 18 B | 168 |
| 19 B | 121 |

Die Produkte 13 B bis 19 B wurden nach Beispiel 3 C umgesetzt.

Tabelle 3

| Beispiel | Produkt | | Acrylnitril | HAV des Endproduktes |
|---|---|---|---|---|
| 13 C | 590 g | 13 B | 53 g | 161 |
| 14 C | 595 g | 14 B | 53 g | 162 |
| 15 C | 1025 g | 15 B | 53 g | 270 |
| 16 C | 675 g | 16 B | 53 g | 182 |
| 17 C | 735 g | 17 B | 53 g | 197 |
| 18 C | 840 g | 18 B | 53 g | 223 |
| 19 C | 605 g | 19 B | 53 g | 165 |

20) In einen 2 l-Dreihalskolben werden 136 g Xylylendiamin (2Val) und 170 g 1-Amino-3-aminomethyl-3,5,5-trimethylcyclohexan (2 Val) vorgelegt und Stickstoff wird übergeleitet. Bei 60°C addiert man durch Zutropfen in 30' 71,5 g Acrylnitril. Nach Zugabeende hält man noch 1 Std. bei 60°C.

Zu dieser cyanäthylierten Polyamin-Mischung werden bei Raumtemperatur unter Rühren 489 g (1,25 Val) Vorprodukt nach Beispiel 3 A in 15' bis

30' zugesetzt. Nach Beendigung der Zugabe wird noch 1 Std. verrührt, wobei die Temperatur auf ca. 60°C ansteigt. Nach Abfallen der Temperatur wird auf 80°C geheizt und 1 Std. dort gehalten. Danach wird mit Wasser auf 81,5% Festkörper verdünnt. Das erhaltene Härtungsmittel hat einen HAV von 197 und eine Viskosität von 13300 mPa.s.

Herstellung der Epoxydharz-Dispersionen

Epoxydharz-Dispersionen, die mit den erfindungsgemässen Addukten als Härtungsmittel kombiniert werden können, sind u. a. in folgenden Patentschriften beschrieben:

Österreichische Patentschrift 286647 (= Britische Patentschrift 1.244.424) und Japanische Patentschrift 29.625/71, sowie die Schweizerische Patentschrift 603738.

Folgende Epoxydharze wurden bevorzugt eingesetzt:

21) Epoxydharz A (EV-Wert ca. 195)

72 g eines Epoxydharz-Emulgatorgemisches, bestehend aus

66 g einer Mischung aus 88 Gew.-% eines Epoxydharzes auf Basis von Bisphenol A und Epichlorhydrin mit einem Epoxydäquivalent von ca. 186 und einer Viskosität von 9000 mPa.s, und 12 Gew.-% 2-Äthylhexylglycidyläther, wurde in der Wärme mit

6 g eines Emulgatorgemisches, bestehend aus

2,67 g eines Anlagerungsproduktes von 25–30 Molen Äthylenoxyd an 1 Mol Abietinsäure,

1 g eines Anlagerungsproduktes von 30 Molen Äthylenoxyd an 1 Mol p-Nonylphenol

1 g eines Anlagerungsproduktes von 10 Molen Äthylenoxyd an 1 Mol p-Nonylphenol

1,33 g n-Dodecylalkohol vermischt

(Diese Mischung entspricht dem Epoxydharz-Emulgator-Gemisch aus Beispiel 7 der CH-A-603738.

22) Epoxydharz B (EV-Wert ca. 185)

80 g eines Epoxydharz-Emulgatorgemisches, bestehend aus

75,2 g einer Mischung aus 60 Gew.-% eines Epoxydharzes auf Basis Bisphenol A und Epichlorhydrin und 40 Gew.-% eines Epoxydharzes auf Basis Roh-Bisphenol F und Epichlorhydrin mit einem Misch-Epoxydäquivalent von ca. 180 und einer Viskosität von 6500 mPa.s wurde in der Wärme mit

4,8 g eines Emulgatorgemisches, bestehend aus

2,14 g eines Anlagerungsproduktes von 25–30 Molen Äthylenoxyd an 1 Mol Abietinsäure,

0,8 g eines Anlagerungsproduktes von 4 Molen Äthylenoxyd an 1 Mol p-Nonylphenol

0,8 g eines Anlagerungsproduktes von 10 Molen Äthylenoxyd an 1 Mol p-Nonylphenol

1,06 g n-Dodecylalkohol vermischt

23) Epoxydharz C

100 g einer Mischung bestehend aus 60 Gew.-% eines Epoxydharzes auf Basis Bisphenol A und Epichlorhydrin und 40 Gew.-% eines Epoxydharzes auf Basis Roh-Bisphenol F und Epichlorhydrin mit einem Misch-Epoxydäquivalent von ca. 180 und einer Viskosität von 6500 mPa.s.

24) Epoxydharz D

Epoxydharz auf Basis von Bisphenol A und Epichlorhydrin mit einem Epoxydäquivalent von ca. 185 und einer Viskosität von 9000 mPa.s.

25) Je 100g der bevorzugt eingesetzten Epoxydharze A, B, C und D wurden mit Hilfe eines Rührers mit den erfindungsgemässen Härtungsmitteln der Beispiele 1 C bis 19 C, 20 und 1 B bis 3 B äquivalent vermischt. Es wurde soviel Wasser zugesetzt, bis die Dispersionen 60%ig waren. Die Mengen sind der nachfolgenden Tabelle zu entnehmen.

Tabelle 4

| | | Mengen Härtungsmittel pro 100g Epoxydharz | | | |
|---|---|---|---|---|---|
| | | A | B | C | D |
| Härtungsmittel gemäss Beispiel | 1 C | 82 | 86 | 88 | 86 |
| | 2 C | 95 | 100 | 103 | 100 |
| | 3 C | 101 | 106 | 109 | 106 |
| | 4 C | 101 | 106 | 109 | 106 |
| | 5 C | 111 | 117 | 120 | 117 |
| | 6 C | 90 | 95 | 97 | 95 |
| | 7 C | 104 | 109 | 112 | 109 |
| | 8 C | 105 | 111 | 114 | 111 |
| | 9 C | 69 | 73 | 75 | 73 |
| | 10 C | 82 | 86 | 88 | 86 |
| | 11 C | 87 | 92 | 94 | 92 |
| | 12 C | 83 | 97 | 89 | 97 |
| | 13 C | 83 | 97 | 89 | 97 |
| | 14 C | 83 | 97 | 90 | 97 |
| | 15 C | 139 | 146 | 150 | 146 |
| | 16 C | 93 | 98 | 101 | 98 |
| | 17 C | 101 | 106 | 109 | 106 |
| | 18 C | 114 | 120 | 124 | 120 |
| | 19 C | 85 | 89 | 92 | 89 |
| | 20 C | 101 | 106 | 109 | 106 |

Die Dispersionen zeigten eine ausgezeichnete Stabilität innnerhalb der Verarbeitungszeit (d.h. bis zum Beginn der Vernetzungsreaktion zwischen Harz- und Härterkomponente), die 30 Minuten bis 5 Stunden betrug.

Die wässrigen Dispersionen unter Verwendung des Epoxydharzes A wurden in ca. 200µm Schichtstärke auf phosphatierte Eisenbleche und Asbest-Zementplatten aufgetragen.

Die anwendungstechnischen Ergebnisse sind in der folgenden Tabelle 5 zusammengefasst, wobei die Numerierung der Dispersionen mit der Kennzeichnung der Härtungsmittel identisch ist. Als Antrocknung wird der Zeitpunkt bezeichnet, an dem bei Berührung mit dem Finger keine Oberflächenklebrigkeit mehr festgestellt werden kann.

Tabelle 5

Dispersion mit Epoxidharz A

| Prüfung auf Asbest-Zementplatten | 1 C | 2 C | 3 C | 4 C | 5 C | 6 C | 7 C | 8 C | 9 C | 10 C |
|---|---|---|---|---|---|---|---|---|---|---|
| Topfzeit | 35′ | 1h30′ | 2h55′ | 3h | 3h10′ | 50′ | 1h45′ | 3h10′ | 30′ | 1h20′ |
| Antrocknung | 4h30′ | 5h15′ | 7h20′ | 7h15′ | 7h40′ | 5h10′ | 5h25′ | 7h25′ | 4h | 5h |
| Durchhärtung | ca. 24h | ca. 24h | ca. 30h | ca. 30h | ca. 30h | ca. 24h | ca. 24h | ca. 30h | ca. 24h | ca. 24h |
| Filmbildung | | | | | ← einwandfrei → | | | | | |
| Filmverlauf | | | | | ← einwandfrei → | | | | | |
| Glanz | | | | | ← einwandfrei → | | | | | |
| Prüfung auf phosphatiertem Eisenblech | | | | | | | | | | |
| Pendelhärte nach 1 Woche (nach König) | 90 Sek. | 70 Sek. | 87 Sek. | 90 Sek. | 95 Sek. | 74 Sek. | 90 Sek. | 97 Sek. | 88 Sek. | 65 Sek. |
| Tiefung nach Erichsen DIN 53156 | 10 mm | 10 mm | 10 mm | 10 mm | 11 mm | 12 mm | 11 mm | 12 mm | 8,5 mm | 9 mm |
| Querschnitt n. DIN 53153 | 0 | 1 | 1 | 0 | 0 | 0 | 0 | 0 | 1 | 1 |

Tabelle 5 (Fortsetzung)
Dispersion mit Epoxidharz A

| Prüfung auf Asbest-Zementplatten | 11 C | 12 C | 13 C | 14 C | 15 C | 16 C | 17 C | 18 C | 19 C | 20 C |
|---|---|---|---|---|---|---|---|---|---|---|
| Topfzeit | 2h30′ | 25′ | 1h20′ | 1h35′ | 3h55′ | 2h40′ | 2h50′ | 5h55′ | 2h40′ | 2h55′ |
| Antrocknung | 6h55′ | 4h′ | 5h′ | 5h20′ | 9h10′ | 7h′ | 7h10′ | 11h′ | 7h | 7h15′ |
| Durchhärtung | ca. 24h | ca. 24h | ca. 24h | ca. 24h | ca. 30h | ca. 24h | ca. 24h | ca. 36h | ca. 24h | ca. 24h |
| Filmbildung | | | | | ← einwandfrei → | | | | | |
| Filmverlauf | | | | | ← einwandfrei → | | | | | |
| Glanz | | | | | ← einwandfrei → | | | | | |
| Prüfung auf phosphatiertem Eisenblech | | | | | | | | | | |
| Pendelhärte nach 1 Woche (nach König) | 86 Sek. | 68 Sek. | 70 Sek. | 72 Sek. | 95 Sek. | 90 Sek. | 90 Sek. | 85 Sek. | 80 Sek. | 86 Sek. |
| Tiefung nach Erichsen DIN 53156 | 9 mm | 8 mm | 9 mm | 9 mm | 10 mm | 10 mm | 10 mm | 9 mm | 8,5 mm | 10 mm |
| Querschnitt n. DIN 53153 | 0 | 1 | 1 | 1 | 0 | 0 | 0 | 1 | 1 | 1 |

Die mit den Epoxydharzen B, C und D hergestellten Dispersionen und die daraus hergestellten Filme, lieferten ähnliche Eigenschaften wie mit Epoxydharz A.

26) Je 100g der bevorzugt eingesetzten Epoxydharze A und C wurden auf einer Walze mit 150g nichtkreidendem Titandioxyd vom Rutiltyp und 5g hochdisperser Kieselsäure abgerieben. Mit Hilfe eines Rührers wurden äquivalente Mengen der Härtungsmittel gemäss Beispiel 1 C bis 12 C und soviel Wasser zugesetzt, dass 55%ige Dispersionen erhalten werden. Die Mengen sind der nachfolgenden Tabelle 6 zu entnehmen.

Tabelle 6

| | | Mengen Härtungsmittel pro 255g EP-Harz/$TiO_2$ Kieselsäuremischung | |
|---|---|---|---|
| | | A | C |
| Härtungsmittel | 1 C | 82 | 88 |
| gemäss Beispiel | 2 C | 95 | 103 |
| | 3 C | 101 | 109 |
| | 4 C | 101 | 109 |
| | 5 C | 111 | 120 |
| | 6 C | 90 | 97 |
| | 7 C | 104 | 112 |
| | 8 C | 105 | 114 |
| | 9 C | 69 | 75 |
| | 10 C | 82 | 88 |
| | 11 C | 87 | 94 |
| | 12 C | 83 | 89 |

Die Dispersionen zeigten eine ausgezeichnete Stabilität innerhalb der Verarbeitungszeit (d.h. bis zum Beginn der Vernetzungsreaktion zwischen Harz- und Härterkomponente), die 30 Minunten bis 3 Stunden betrug.

Die wässrigen Dispersionsfarben unter Verwendung des Epoxydharzes C wurden in ca. 100μ Schichtstärke auf phosphatierte Eisenbleche und Asbest-Zementplatten aufgetragen. Die anwendungstechnischen Ergebnisse sind in der folgenden Tabelle 7 zusammengefasst:

Tabelle 7
Dispersion mit Epoxidharz C

| Prüfung auf Asbest-Zementplatten | 1 C | 2 C | 3 C | 4 C | 5 C | 6 C |
|---|---|---|---|---|---|---|
| Topfzeit | 30' | 1h25' | 2h50' | 2h50' | 3h | 50' |
| Antrocknung | 3h | 4h | 5h | 5h | 5h | 3h |
| Durchhärtung | ca. 24h | ca. 24h | ca. 24h | ca. 24h | ca. 24h | ca. 24h |
| Filmbildung | | | ← einwandfrei → | | | |
| Filmverlauf | | | ← einwandfrei → | | | |
| Glanz | | | ← einwandfrei → | | | |
| Prüfung auf phosphatiertem Eisenblech | | | | | | |
| Pendelhärte nach 1 Woche (nach König) | 105 Sek. | 80 Sek. | 92 Sek. | 105 Sek. | 110 Sek. | 83 Sek. |
| Tiefung nach Erichsen DIN 53156 | 4,5 mm | 3,5 mm | 3,5 mm | 4,6 mm | 5 mm | 3,5 mm |

Tabelle 7 (Fortsetzung)
Dispersion mit Epoxidharz C

| Prüfung auf Asbest-Zementplatten | 7 C | 8 C | 9 C | 10 C | 11 C | 12 C |
|---|---|---|---|---|---|---|
| Topfzeit | 1h40' | 3h50' | 30' | 1h15' | 2h30' | 30' |
| Antrocknung | 4h | 5h | 3h | 4h | 4h30' | 3h |
| Durchhärtung | ca. 24h | ca. 24h | ca. 24h | ca. 24h | ca. 24h | ca. 24h |
| Filmbildung | | | ← einwandfrei → | | | |
| Filmverlauf | | | ← einwandfrei → | | | |
| Glanz | | | ← einwandfrei → | | | |
| Prüfung auf phosphatiertem Eisenblech | | | | | | |
| Pendelhärte nach 1 Woche (nach König) | 105 Sek. | 112 Sek. | 100 Sek. | 80 Sek. | 85 Sek. | 80 Sek. |
| *Tiefung nach Erichsen* DIN 53156 | 5 mm | 5 mm | 4 mm | 3 mm | 3 mm | 3 mm |

Die mit dem Epoxydharz A hergestellte Dispersionsfarbe und die daraus hergestellten Filme zeigten ähnliche Prüfergebnisse wie mit Epoxydharz C.

Mit dem Ausdruck «Topfzeit» wurde die Zeit bezeichnet, die verstreicht, bis eine Dispersion aus 50g des Epoxydharzes, 50g Wasser und einer äquivalenten Menge des jeweiligen erfindungsgemässen Härtungsmittels Beispiel 1 C bis 19 C geliefert ist, bzw. bis die Viskosität der Dispersion so stark angestiegen ist, dass ihre sachgemässe Verarbeitung nicht mehr möglich ist.

27) Eine Mischung, bestehend aus 80g feinkörnigem Quarzsand (Korngrösse 0,5 mm), 160g grobkörnigem Quarzsand, 80g Zement, 11g des Epoxydharzes B und 11,7g des erfindungsgemässen Härtungsmittels gemäss Beispiel 3 C wurden in einem Mischgerät homogen gemischt und mit 80g Wasser zu einer pastösen Konsistenz verrührt. Diese Masse wurde mit einem Rakel zu einem etwa 5mm starken Betonbodenbelag verarbeitet, der nach dem Durchhärten eine ausgezeichnete Öl- und Wasserfestigkeit aufwies. Zug-, Druck-, und Biegefestigkeiten der Betonmischung werden durch den Zusatz der Epoxydharz-Härtungsmittel-Dispersion um ca. 20% verbessert.

**Patentansprüche**

1. Härtungsmittel für wässrige Epoxydharz-Dispersionen, bestehend aus einem Umsetzungsprodukt, erhältlich aus
A) 20 bis 80 Gew.-% eines Adduktes aus
a1) mindestens einer Polyepoxyverbindung und
a2) mindestens eines Polyalkylenpolyätherpolyols mit einem mittleren Molekulargewicht von 200 bis 10000 durch Umsetzung im Äquivalentverhältnis von a1 : a2 = 2 : (0,1 bis 1,5) mit
B) 80 bis 20 Gew.-% eines aliphatischen cycloaliphatischen, araliphatischen oder heterocyclischen Polyamins oder Polyamingemisches, wobei das eingesetzte Amin in einer solchen Menge verwendet wird, dass die am Stickstoff befindlichen H-Atome in einem 2- bis 10-fachen Überschuss, bezogen auf die zur Umsetzung befähigten Epoxydgruppen, vorhanden sind, dadurch gekennzeichnet, dass an die reaktiven Gruppen des Polyamins B noch C) zur Addition befähigte ungesättigte Verbindungen vom Typ

HC=C–X, wobei $R_1$=H, $-CH_3$ – $C_2H_5$, $R_2$=H,
| |
$R_1$ $R_2$

$-CH_3$ und X = –CN, –COOH, $-COOCH_3$, $-COOC_2H_5$, $-COOC_3H_7$, $-COOC_4H_9$, $-CONH_2$, $COONHCH_3$, $CON(CH_3)_2$ bedeuten,
addiert sind.

2. Härtungsmittel nach Anspruch 1, dadurch gekennzeichnet, dass am Stickstoff befindlichen H-Atom von α) dem Umsetzungsprodukt von a1), a2) und B) bzw. β) dem Überschuss von B) über die zur Umsetzung mit dem Addukt aus a1) und a2) erforderliche Menge, bis zu 0,5, vorzugsweise 0,1 bis 0,3 Äquivalente der Komponente C) addiert sind.

3. Härtungsmittel nach Anspruch 1 oder 2, dadurch gekennzeichnet, dass die Komponente a1) eine wasserunlösliche Polyepoxydverbindung und die Komponente a2) ein wasserlösliches Polyalkylenpolyähterpolyol ist.

4. Härtungsmittel nach einem oder mehreren der Ansprüche 1 bis 3, dadurch gekennzeichnet, dass das Umsetzungsprodukt aus
A) 50 bis 70 Gew.-% des Addukts aus
a1) 2,3 bis 3 Äquivalenten der Polyepoxydverbindung und
a2) 0,3 bis 0,8 Äquivalenten des Polyalkylenpolyätherpolyols mit
B) 50 bis 30 Gew.-% des Polyamins oder Polyamingemisches, wobei das eingesetzte Amin in einer solchen Menge verwendet wird, dass die am N-Atom befindlichen H-Atome in einem 5- bis 8-fachen Überschuss vorhanden sind, besteht.

5. Verfahren zur Herstellung von Härtungsmitteln für wässrige Epoxydharz-Dispersionen, bestehend aus einem Umsetzungsprodukt, erhältlich aus
A) 20 bis 80 Gew.-% eines Adduktes aus
a1) mindestens einer Polyepoxydverbindung und
a2) mindestens eines Polyalkylen-Polyäther-Polyols mit einem mittleren Molekulargewicht von 200 bis 10000 durch Umsetzung im Äquivalentverhältnis von a1 : a2 = 2: (0,1 bis 1,5 ) mit
B) 80 bis 20 Gew.-% eines aliphatischen, cycloaliphatischen, araliphatischen oder heterocyclischen Polyamins oder Polyamingemisches, wobei das eingesetzte Amin in einer solchen Menge verwendet wird, dass die am Stickstoff befindlichen H-Atome in einem 2- bis 10-fachen Überschuss, bezogen auf die zur Umsetzung befähigten Epoxydgruppen, vorhanden sind, dadurch gekennzeichnet, dass
I) zunächst das Addukt A aus a1) und a2) in Gegenwart eines $BF_3$-Amin-Komplexes als Katalysator hergestellt wird und dieses anschliessend mit einem Addukt eines Polyamins B) mit C) einer ungesättigten Komponente der Formel $HC(R_1) = C(R_2)-X$, worin $R_1$ $R_2$ und X die oben genannte Bedeutung haben, umgesetzt wird oder
II) das Reaktionsprodukt der Komponente a1), a2) mit einem Polyamin B) mit C) einer ungesättigten Verbindung der Formel $HC(R_1) = C(R_2)-X$, worin $R_1$, $R_2$ und X die oben angegebene Bedeutung haben, umgesetzt wird, wobei die Reaktionen bei Einsatz der Komponente C) bei einer Temperatur zwischen 20 und 70°C durchgeführt werden.

6. Verfahren nach Anspruch 5, dadurch gekennzeichnet, dass die Umsetzung von a1) mit a2) bei einer Temperatur von 20 bis 200°C erfolgt und die des erhaltenen Adduktes mit dem Polyamin-Addukt der Komponente C) bei einer Temperatur von 20 bis 100°C, vorzugsweise 20 bis 40°C.

7. Verfahren nach Anspruch 5 oder 6, dadurch gekennzeichnet, dass man als Komponente a1) Polyphenolglycidyläther einsetzt.

8. Verwendung der Härtungsmittel gemäss einem oder mehreren der Ansprüche 1 bis 4, zusammen mit polyfunktionellen Epoxydverbindungen a1) und Wasser zur Herstellung von aushärtbaren Dispersionen mit bis zu 90, vorzugsweise bis zu 50 Gew.-% Wassergehalt als Beschichtungs- oder Überzugsmittel.

**Claims**

1. Hardening agent for aqueous epoxy resin dispersions, consisting of a reaction product obtainable from
A) 20 to 80% by weight of an adduct of
a1) at least one epoxide compound and
a2) at least one polyalkylene polyether polyol with

an average molecular weight of from 200 to 10000 by reaction in an equivalent ratio of a1 : a2 = 2 : (0.1 bis 1.5) with
B) 80 to 20% by weight of an aliphatic, cycloaliphatic, araliphatic or heterocyclic polyamine or a mixture of polyamines, wherein the amine employed is used in such an amount, that the hydrogen atoms attached to the nitrogen are present in a 2 to 10 times excess, relative to the epoxide groups capable of being reacted, characterized in that there are further added to the reactive groups of polyamine B)
C) unsaturated compounds which are capable of being added and have the formula

HC=C–X, wherein $R_1$ is H, $-CH_3$, $-C_2H_5$, $R_2$ is H,
| |
$R_1$ $R_2$

$-CH_3$ and X is $-CN$, $-COOH$, $-COOCH_3$, $-COOC_2H_5$, $-COOC_3H_7$, $-COOC_4H_9$, $-CONH_2$, $COONHCH_3$, $CON(CH_3)_2$.

2. Hardening agent according to claim 1, characterized in that per hydrogen atom attached to the nitrogen of α), the reaction product of a1), a2) and B, or of β) the excess of B) over the amount essential for the reaction with the adduct of a1) and a2) respectively, up to 0,5, preferably of from 0,1 to 0,3 equivalents of component C) are added.

3. Hardening agent according to claim 1 or 2, characterized in that the component a1) is a water-insoluble polyepoxide compound and the component a2) is a water-soluble polyalkylene polyether polyol.

4. Hardening agent according to one or more of claims 1 to 3, characterized in that the reaction product consists of
A) 50 to 70% by weight of the adduct derived from
a1) 2.3 to 3 equivalents of the polyepoxide compound and
a2) 0.3 to 0.8 equivalents of the polyalkylene polyether polyol with
B) 50 to 30% by weight of the polyamine or the mixture of polyamines, wherein the amine employed is used in such an amount that the hydrogen atoms, attached to the nitrogen atom are present in a 5- to 8-times excess.

5. Process for the preparation of hardening agents for aqueous epoxy resins dispersions consisting of a reaction product, obtainable from
A) 20 to 80% by weight of an adduct of
a1) at least one polyepoxide compound and
a2) at least one polyalkylene polyether polyol with an average molecular weight of from 200 to 10000 by reaction in an equivalent ratio of a1 : a2 = 2 : (0.1 bis 1.5) with
B) 80 to 20% by weight of an aliphatic, cycloaliphatic, araliphatic or heterocyclic polyamine or a mixture of polyamines, wherein the amine employed is used in such an amount that the hydrogen atoms, attached to the nitrogen are present in a 2 to 10 times excess, relative to the epoxide groups, capable of being reacted, characterized in that
I) at first the adduct A) of a1) and a2) is prepared in the presence of a $BF_3$-amine complex as catalyst and this product is reacted subsequently with an adduct of a polyamine B) with C) an unsaturated component of formula $HC(R_1) = C(R_2)-X$, wherein $R_1$, $R_2$ and X have the meaning mentioned above or
II) the reaction product of components a1), a2) with a polyamine B) is reacted with C) an unsaturated component of formula $HC(R_1) = C(R_1)-X$ wherein $R_1$, $R_2$ and X have the meaning mentioned above, the reactions with the use of component C) being carried out at a temperature of from 20 to 70°C.

6. Process according to claim 5, characterized in that the reaction of a1) with a2) is carried out at a temperature of from 20 to 200°C and that of the adduct obtained with the polyamine adduct of component C) at a temperature of from 20 to 100°C, preferably of from 20 to 40°C.

7. Process according to claim 5 or 6, characterized in that polyphenol glycidyl ether is employed as component a1).

8. Use of hardening agents according to one or more of claims 1 to 4 together with polyfunctional epoxide compounds a1) and water for the preparation of hardenable dispersions with up to 90, preferably up to 50% by weight of water content as coverings or coating compositions.

**Revendications**

1. Durcisseur pour des dispersions aqueuses de résine époxyde, consistant en un produit de réaction que l'on peut obtenir à partir de:
A) 20 à 80% en poids d'un produit d'addition de:
a1) au moins un polyépoxyde, et
a2) au moins un polyalkylènepolyéther-polyol (polyoxyalkylène-polyol) présentant un poids moléculaire moyen compris entre 200 et 10000, par réaction selon un rapport entre équivalents de a1 : a2 = 2 : (0,1 à 1,5), avec
B) 80 à 20% en poids d'une polyamine aliphatique, cycloaliphatique, araliphatique ou hétérocyclique ou d'un mélange de polyamines l'amine mise en œuvre étant utilisée en une quantité telle que les atomes d'hydrogène se trouvant sur l'azote sont présents en un excès de deux à dix fois par rapport aux groupes époxydes capables de réagir, durcisseur caractérisé en ce qu'on fixe encore sur les groupes réactifs de la polyamine B des composés C) insaturés capables d'une addition et du type

HC=C–X, où $R_1$ représente H, $-CH_3$, $-C_2H_5$;
| |
$R_2$

$R_2$ représente H, $-CH_3$ et X représente $-CN$, $-COOH$, $-COOCH_3$, $-COOC_2H_5$, $-COOC_3H_7$, $-COOC_4H_9$, $-CONH_2$, $COONHCH_3$, $CON(CH_3)_2$.

2. Durcisseur selon la revendication 1, caractérisé en ce que, par atome d'hydrogène se trouvant par atome d'azote dans (alpha) le produit de réaction de a1), a2) et B), ou dans (β) l'excès de B) par rapport à la quantité nécessaire pour réagir avec le produit d'addition de a1) et de a2), on ajoute jusqu'à 0,5 et de préférence 0,1 à 0,3, équivalent du constituant C).

3. Durcisseur selon l'une des revendications 1 et 2, caractérisé en ce que le constituant a1) est un polyépoxyde insoluble dans l'eau et le constituant a2) est un polyalkylènepolyéther-polyol (ou polyoxyalkylène-polyol) insoluble dans l'eau.

4. Durcisseur selon l'une quelconque des revendications 1 à 3, caractérisé en ce que le produit de réaction consiste en:
A) 50 à 70% en poids du produit d'addition de
a1) 2,3 à 3 équivalents du polyépoxyde, et
a2) 0,3 à 0,8 équivalent du polyalkylènepolyéther-polyol, avec
B) 50 à 30% en poids de la polyamine ou du mélange de polyamines, l'amine que l'on met en œuvre étant utilisée en une quantité telle que les atomes d'hydrogène se trouvant sur l'atome d'azote sont présents en un excès de cinq à huit fois.

5. Procédé pour préparer des durcisseurs pour des dispersions aqueuses d'une résine époxyde, consistant en un produit de réaction, que l'on peut obtenir à partir de:
A) 20 à 80% en poids d'un produit d'addition de:
a1) au moins un polyépoxyde, et
a2) au moins un polyalkylènepolyéther-polyol présentant un poids moléculair moyen de 200 à 10000, par réaction, selon un rapport entre équivalents de a1 : a2 = 2 : (0,1 à 1,5), avec
B) 80 à 20% en poids d'une polyamine aliphatique, cycloaliphatique, araliphatique ou hétérocyclique ou d'un mélange de polyamines, l'amine mise en œuvre étant utilisée en une quantité telle que les atomes d'hydrogène se trouvant sur l'azote sont présents en un excès de deux à dix fois, par rapport aux groupes époxydes capables de réagir, procédé caractérisé en ce que:
I) on prépare tout d'abord le produit d'addition A à partir de a1) et de a2) en présence d'un complexe $BF_3$/amine comme catalyseur, et l'on fait ensuite réagir ce produit d'addition avec un produit d'addition d'une polyamine B) avec C) un constituant insaturé de formule $HC(R_1) = C(R_2){-}X$, où $R_1$, $R_2$ et X ont le sens indiqué ci-dessus, ou bien
II) on fait réagir le produit de la réaction des constituants a1) et a2) avec une polyamine B) avec C) un composé insaturé de formule $HC(R_1) = C(R_2){-}X$, où $R_1$, $R_2$ et X ont le sens indique ci-dessus, les réactions effectuées par introduction du constituant C) étant réalisées à une température comprise entre 20 et 70°C.

6. Procédé selon la revendication 5, caractérisé en ce que la réaction de a1) avec a2) s'effectue à une température de 20 à 200°C, et celle du produit d'addition ainsi obtenu avec le produit d'addition d'une polyamine et du constituant C) s'effectue à une température de 20 à 100°C, avantageusement de 20 à 40°C.

7. Procédé selon la revendication 5 ou 6, caractérisé en ce qu'on utilise comme constituant a1) un éther glycidylique de polyphénol.

8. Utilisation du durcisseur selon l'une quelconque des revendications 1 à 4, avec des époxydes polyfonctionnels (a1) et de l'eau pour préparer des dispersions durcissables comportant jusqu'à 90%, avantageusement jusqu'à 50% en poids d'eau et destinées à servir de compositions d'enduction ou de revêtement.